# EUROPÄISCHE PATENTSCHRIFT

(11) **EP 3 356 848 B1**
(45) Veröffentlichungstag und Bekanntmachung des Hinweises auf die Patenterteilung: **16.09.2020**
(21) Anmeldenummer: 16747501.1
(22) Anmeldetag: 03.08.2016
(51) Int. Cl.: G01S 13/00

(54) **WINDPARKFLUGBEFEUERUNGSSYSTEM SOWIE WINDPARK DAMIT UND VERFAHREN ZUR BEFEUERUNG EINES WINDPARKS**
WIND FARM AIRCRAFT BEACON SYSTEM AND WIND FARM HAVING SAID SYSTEM AND METHOD FOR PROVIDING A WIND FARM WITH A BEACON
SYSTÈME DE FEUX DE BALISAGE AÉRIEN D'UN PARC ÉOLIEN AINSI QUE PARC ÉOLIEN POURVU DU SYSTÈME ET PROCÉDÉ DE BALISAGE D'UN PARC ÉOLIEN

(30) Priorität: 30.09.2015 DE 102015116596
(43) Veröffentlichungstag der Anmeldung: 08.08.2018
(73) Patentinhaber: Wobben Properties GmbH, 26607 Aurich (DE)
(72) Erfinder: RISTAU, Joachim, 26382 Wilhelmshaven (DE); STÜRENBURG, Erich, 26605 Aurich (DE); HARMS, Stephan, 26529 Upgant-Schott (DE)
(74) Vertreter: Eisenführ Speiser
(86) Internationale Anmeldenummer: PCT/EP2016/068476
(87) Internationale Veröffentlichungsnummer: WO 2017/054966

(56) Entgegenhaltungen:
- DE-A1-102013 004 463
- US-A1- 2011 241 926
- US-A1- 2014 327 569
- US-B1- 8 742 977

## Beschreibung

Die Erfindung betrifft ein Windparkflugbefeuerungssystem, also ein System zur Flugbehinderungsbefeuerung für einen Windpark, sowie einen Windpark mit einem derartigen Windparkflugbefeuerungssystem. Ferner betrifft die Erfindung ein Verfahren zur Befeuerung eines Windparks.

Gemäß dem Stand der Technik sind Systeme zur Flugbehinderungsbefeuerung, im Folgenden auch kurz Systeme zur Flugbefeuerung oder Flugbefeuerungssysteme genannt, bekannt, die zur Befeuerung der Windenergieanlagen eines Windparks eingesetzt werden.

Die Flugbefeuerung umfasst eine oder mehrere Leuchten, die an den Windenergieanlagen angeordnet sind und dienen, um Flugobjekte auf sich im Bereich der Flugbahn befindende Windenergieanlagen bei schlechter Sicht oder nächtlicher Dunkelheit aufmerksam zu machen.

Es ist eine Vielzahl von unterschiedlichen Flugbefeuerungssystemen für Windparks bekannt. Gemäß einem ersten System wird z. B. eine Steuerung der Leuchten der Flugbefeuerungssysteme so vorgenommen, dass diese tagsüber abgeschaltet werden, um Energie zu sparen. Eine tageszeitabhängige Steuerung der Flugbefeuerung bringt jedoch das Problem mit sich, dass auch tagsüber schlechte Sicht herrschen kann, bei der das Einschalten der Flugbefeuerung nötig ist. Auch ein durchgängiges Befeuern der Windenergieanlagen in der Nacht ist störend für Anwohner im Bereich der Windenergieanlagen.

Daher wurden bereits weitergehende Vorschläge gemacht, um die Flugbefeuerung im Bedarfsfall einzuschalten. Ein derartiger Bedarfsfall tritt ein, wenn sich ein Flugobjekt in den Bereich einer Windenergieanlage oder eines Windparks nähert.

Das Annähern der Flugobjekte wird gemäß diesen bekannten Flugbefeuerungssystemen beispielsweise mittels passiver Sekundärradare erkannt, die ein Transpondersignal eines Flugobjekts detektieren und in Abhängigkeit der Detektion die Leuchten ein- oder abschalten. Diese Systeme sind jedoch abhängig von externen

Signalen, wie hier dem Transpondersignal des Flugobjekts.

Ferner sind auch unabhängige Systeme bekannt, bei denen mehrere Aktivradare an jeder Windenergieanlage eines Windparks vorgesehen sind, so dass auf ein Transpondersignal der Flugobjekte verzichtet werden kann. Aktivradrare sind jedoch sehr teuer.

Aufgrund des hohen Preises von aktiven Radaren wurden weitere alternative Systeme vorgeschlagen, die beispielsweise Mikrofonarrays vorsehen, um Flugobjekte durch Ihre ausgestrahlten Geräusche zu detektieren und somit in Abhängigkeit der Detektion der Geräusche die Leuchten ein- oder abzuschalten.

Obwohl bereits diverse Lösungen für Windparkflugbefeuerungssysteme bekannt sind, sind diese entweder sehr teuer in der Umsetzung oder Fehlfunktionen sind nicht zur Gänze ausgeschlossen. Beispielsweise können beim Passivradarsystem Sendeeinheiten der Flugobjekte zum Senden des Transpondersignals ausfallen.

Aufgabe der Erfindung ist es daher, eine Alternative zu den bereits bekannten Systemen zu finden, durch die einerseits Fehlfunktionen, z. B. durch ausfallende Transpondersignale, minimiert werden und andererseits ein günstiges und zuverlässiges Windparkflugbefeuerungssystem zur Verfügung gestellt wird.

Das deutsche Patent- und Markenamt hat in der Prioritätsanmeldung zu vorliegender Anmeldungen den folgenden Stand der Technik recherchiert: DE 10 2011 086 990 A1 und DE 10 2013 004 463 A1.

In Dokument DE 10 2013 004 463 A1 wird eine Vorrichtung sowie ein Verfahren zur Detektion von Flugobjekten in einem Gebiet, in dem Windenergieanlagen betrieben werden, offenbart. Die Vorrichtung umfasst mindestens einen Radarsensor zur Überwachung des Gebiets und eine Auswerteeinheit, mit der von dem Radarsensor erfasste Signale zur Detektion der Flugobjekte auswertbar sind. Weiter wird offenbart, dass sich die Vorrichtung und das Verfahren auch zur Aktivierung einer Warnbefeuerung eignen.

Weiter wird im Dokument US 8,742,977 B1 ein Radar zum Erfassen und Verfolgen von Positionen von Vögeln im Bereich von Windenergieanlagen offenbart, um hierdurch Kollisionen zwischen den Vögeln und den Rotorblättern von Windenergieanlagen zu verhindern, indem Abhängigkeit von den erkannten und verfolgten Positionen von Vögeln Abschreckungseinrichtungen, wie Blitzlichter, Luftkanonen oder Geräuscherzeugung, aktiviert werden. Die Dokumente US 2011/0241926 A1 und US 2014/0327569 A1 offenbaren Radarsysteme für Windenergieanlagen zum Detektieren von Flugobjekten.

Die Erfindung löst die Aufgabe mit den Merkmalen der unabhängigen Ansprüche.

Erfindungsgemäß wird daher ein Windparkflugbefeuerungssystem, also ein System zur Flugbehinderungsbefeuerung der Windenergieanlagen eines Windparks vorgeschlagen.

Das Windparkflugbefeuerungssystem umfasst erfindungsgemäß mehrere Flugbefeuerungseinrichtungen, die insbesondere Leuchten aufweisen. Ferner umfasst das Windparkflugbefeuerungssystem mindestens eine Sendestation zum Aussenden elektromagnetischer Wellen, insbesondere Radarwellen, und/oder zum Aussenden von Schallwellen. Es sind zudem mindestens zwei Empfangsstationen zum Empfangen elektromagnetischer Wellen, insbesondere reflektierter Radarwellen, und/oder reflektierter Schallwellen vorgesehen.

Die Anzahl der Empfangsstationen beträgt mindestens ein Mehrfaches, insbesondere mindestens ein ganzzahliges Mehrfaches, also mindestens ein zweifaches oder besonders bevorzugt mindestens ein dreifaches, der Anzahl der Sendestationen. Demnach sind also im Falle einer Sendestation mindestens zwei Empfangsstationen, im Falle zweier Sendestationen mindestens vier Empfangsstationen, im Falle dreier Sendestationen mindestens sechs Empfangsstationen usw. vorgesehen.

Ein Windparkflugbefeuerungssystem weist außerdem eine Auswerteeinrichtung auf, mittels derer die Positionen von Flugobjekten, also Flugobjektpositionen, detektierbar sind. Die Auswerteeinrichtung detektiert die Flugobjektpositionen durch Auswertung der mit der Sendestation ausgesendeten und der Empfangsstation empfangenen elektromagnetischen Wellen und/oder durch Auswertung der mit der Sendestation ausgesendeten und der Empfangsstation empfangenen Schallwellen. Vorzugsweise wird hierzu eine Laufzeitbestimmung der elektromagnetischen Wellen oder Schallwellen durchgeführt. Mittels mindestens einer Schalteinrichtung wird zumindest eine der Flugbefeuerungseinrichtungen in Abhängigkeit der mit der Auswerteeinrichtung detektierten Flugobjektpositionen ein- oder ausgeschaltet.

Der Erfindung liegt die Erkenntnis zugrunde, dass für einen Windpark bestehend aus mehreren Windenergieanlagen üblicherweise mehrere Radarsysteme jeweils bestehend aus einem Sender und einem Empfänger vorgesehen sind, um trotz der "Verschattung" einzelner Radarempfänger durch die Türme sowie die Rotorblätter der Windenergieanlagen eine zuverlässige Überwachung des Luftraums zu gewährleisten.

Da jedoch der Einsatz von Passivradaren - wie bereits oben beschrieben - nicht zur Gänze fehlerfrei möglich und der Einsatz von einer Mehrzahl von Aktivradaren sehr teuer ist, stellt die erfindungsgemäße Lösung eine zuverlässige und gleichzeitig kostengünstige Alternative dar.

Es werden nämlich nur eine Sendestation oder sehr wenige, insbesondere zwei oder drei, Sendestationen vorgesehen, mit der elektromagnetische Wellen oder Schallwellen ausgesendet werden, so dass - im Gegensatz zur Passivradarlösung - eine konstante bzw. kontrollierbare "Quelle" für elektromagnetische Wellen oder Schallwellen zur Verfügung steht. Ein Ausfall der Sendestation oder Sendestationen würde bzw. würden im Gegensatz zu einem ausfallenden Flugtransponder, sofort bemerkt werden. Auf den Fehlerfall einer ausfallenden Sendestation könnte demnach sofort reagiert werden, indem z. B. die Flugbefeuerungseinrichtungen dauernd eingeschaltet werden.

Ferner werden neben der oder den Sendestationen mehrere vergleichsweise günstige Empfangsstationen zum Empfangen der elektromagnetischen Wellen eingesetzt, um eine gute Abdeckung des zu überwachenden Luftbereichs zu erreichen.

Die Empfangsstationen können hierzu in Abhängigkeit der Positionen der Windenergieanlagen eines Windparks im Windpark verteilt sein. Mit der Auswerteeinrichtung und der Schalteinrichtung werden dann Flugbefeuerungseinrichtungen in Abhängigkeit der detektierten Flugobjektpositionen ein- oder ausgeschaltet.

In der Auswerteeinrichtung werden die Flugbahnen von Flugobjekten gemäß einer Ausführungsform mittels Laufzeitbestimmung der gesendeten sowie der empfangenen elektromagnetischen Wellen oder Schallwellen erkannt. Die Flugobjekte können beispielsweise genau verfolgt werden, sodass in den Bereich des Windparks eintretende und aus diesem Bereich heraustretende Objekte nicht nur genau verfolgt, sondern beispielsweise sogar ein- und austretende Flugobjekte gezählt und die Anzahlen verglichen werden können.

Außerdem ist es gemäß einer bevorzugten Ausführungsform sogar möglich, im Falle, dass eine Flugbahn nicht wieder aus dem Bereich des Windparks herausführt - was z. B. der Fall beim Landen eines Rettungshubschraubers sein kann - die Flugbefeuerung solange eingeschaltet bleibt, bis diese wieder aus dem Bereich des Windparks heraustritt. Gemäß einer weiteren Ausführungsform bleibt die Flugbefeuerung jedoch nur für einen vordefinierten Zeitraum von z. B. einem Tag eingeschaltet, da auch der Fall vorstellbar ist, dass ein Flugobjekt im Bereich des Windparks landet und dann auf dem Boden abtransportiert wird, sodass die Flugbahn nie aus dem Bereich des Windparks heraustreten wird.

Gemäß einer vorteilhaften Ausführungsform sind die Sendestation und die Empfangsstation eingerichtet, an oder auf einer Gondel einer Windenergieanlage angeordnet zu werden. Eine derartige Anordnung der Sendestation und Empfangsstationen erhöht die Akzeptanz des Windparkflugbefeuerungssystems gegenüber der Bevölkerung, da die elektromagnetischen Wellen weiter entfernt vom Untergrund abgesendet werden, so dass eine vermeintliche Beeinflussung von Personen am Boden durch die elektromagnetischen Wellen verringert wird. Ferner wird der "Verschattung" einzelner Empfangsstationen durch den eigenen Turm entgegengewirkt. Aufgrund dieser "Verschattung" ist z. B. die Anordnung von drei um 120 Grad versetzt angeordneten Radarempfängern um den Turm - wie heute üblich - nicht mehr nötig.

Gemäß einer weiteren vorteilhaften Ausführungsform umfasst die Sendestation zwei zueinander beabstandet angeordnete Aktivradare. Hierdurch ist es möglich, ausgesendete elektromagnetische Wellen redundant von zwei Punkten auszusenden. Einer Behinderung ausgesendeter elektromagnetischer Wellen durch die Rotorblätter der Windenergieanlage, an der die Sendestation angeordnet ist, aber auch durch die Rotorblätter anderer Windenergieanlagen des Windparks, wird damit entgegengewirkt. Die Aktivradare sind vorteilhafterweise Impulsradare, die Impulse zur Entfernungsmessung nach dem Laufzeitprinzip aussenden.

Gemäß einer weiteren vorteilhaften Ausführungsform umfasst jedes Aktivradar jeweils einen Sender mit einem horizontalen Öffnungswinkel von 360 Grad zum Aussenden elektromagnetischer Wellen und vorteilhafterweise auch einen Empfänger mit einem horizontalen Öffnungswinkel von 360 Grad zum Empfangen elektromagnetischer Wellen.

Gemäß einer weiteren Ausführungsform umfasst der Sender eines Aktivradars auch einen vertikalen Öffnungswinkel zum Aussenden elektromagnetischer Wellen. Auch der Empfänger weist einen vertikalen Öffnungswinkel zum Empfangen elektromagnetischer Wellen auf. Die vertikalen Öffnungswinkel sind bevorzugt voreinstellbar. Ein vertikaler Öffnungswinkel gemäß einer bevorzugten Ausführungsform entspricht einem Winkel zwischen 60 und 80 Grad.

Die Sendestation dient somit zum Aussenden der elektromagnetischen Wellen und insbesondere auch zum Empfangen reflektierter ausgesendeter elektromagnetischer Wellen aus jeder Richtung auf die Windenergieanlage, an der die Sendestation beispielsweise angeordnet ist.

Gemäß einer weiteren Ausführungsform umfasst das Flugbefeuerungssystem neben genau einer Sendestation mindestens drei Empfangsstationen. Demnach ist die Überwachung eines Luftraums um einen Windpark, der z. B. im Wesentlichen viereckig angeordnet ist, mit einem relativ geringen Kostenaufwand möglich. Hierzu sind die Empfangsstationen insbesondere derart eingerichtet, um jeweils an einer der Windenergieanlagen, die eine Eckposition im Windpark aufweist, angeordnet zu werden. Die Sendestation ist dann eingerichtet, an der Windenergieanlage angeordnet zu werden, die im Bereich der vierten noch übrigen Ecke des Windparks positioniert ist, an der keine Empfangsstation vorgesehen wird.

Da die Sendestation gemäß einer Ausführungsform auch zum Empfangen von elektromagentischen Wellen dient, sind somit alle vier Ecken des Windparks mit Empfängern zum Empfangen elektromagnetischer Wellen ausgestattet. Ungehindert durch den Windpark selbst, können somit aus allen Richtungen Flugobjektpositionen detektiert werden. Dies erfolgt, indem die mit der Sendestation ausgesendeten elektromagnetischen Wellen und/oder Schallwellen an den Flugobjekten reflektiert und die reflektierten elektromagnetischen Wellen und/oder Schallwellen wiederum vom Windparkflugbefeuerungssystem empfangen werden.

Ein derartiges System ist durch den Einsatz einer einzigen Sendestation und mehrerer Empfangsstationen sehr günstig und trotzdem sehr zuverlässig.

Ferner sind gemäß einem weiteren vorteilhaften Ausführungsbeispiel mindestens zwei oder genau zwei der Empfangsstationen eingerichtet, mit einem Höhenunterschied zueinander an unterschiedlichen Windenergieanlagen angeordnet zu werden. Ein Höhenunterschied der Empfangsstationen zueinander beträgt vorzugsweise mehr als 5, 10 oder 20 Meter. Besonders vorteilhaft ist ein Höhenunterschied von 40 bis 60 Meter. Durch eine derartige Anordnung kann auf einfache Weise durch Vergleich des Laufzeitunterschieds empfangener elektromagnetischer Wellen und/oder Schallwellen, in einfacher Weise auf die Höhe eines Flugobjekts geschlossen werden.

Gemäß einer weiteren Ausführungsform umfasst das Windparkflugbefeuerungssystem für jede Windenergieanlage des Windparks jeweils genau eine Empfangsstation. Demnach ist es möglich, die Flugbefeuerungseinrichtung einer Windenergieanlage allein in Abhängigkeit der mit der Empfangsstation dieser Windenergieanlage empfangenen elektromagnetischen Wellen und/oder Schallwellen ein- und abzuschalten.

Hierfür weist gemäß einer speziellen Ausführungsform jede Windenergieanlage auch eine eigene Auswerteeinrichtung, mit der die Flugobjektpostionen nur anhand der mit der jeweiligen Empfangsstation detektiert werden, und eine eigene Schalteinrichtung, mit der nur anhand der detektierten Flugobjektpostionen mit der jeweiligen Auswerteeinrichtung die Flugbefeuerungseinrichtung ein- und abgeschaltet werden, auf.

Der Ausfall einer Empfangsstation, einer Auswerteeinrichtung oder einer Schalteinrichtung einer einzelnen Windenergieanlage würde somit nicht zum Ausfall des gesamten Windparkflugbefeuerungssystems führen.

Gemäß einer weiteren Ausführungsform weisen die Empfangsstationen jeweils zwei zueinander beabstandet angeordnete Passivradare auf. Demnach ist auch der "Verschattung" einzelner Empfangsstationen durch die Türme oder Rotorblätter der eigenen oder anderer Windenergieanlagen desselben Windparks entgegengewirkt.

Gemäß einer weiteren Ausführungsform weist jedes Passivradar jeweils einen Empfänger mit einem horizontalen Öffnungswinkel von 360 Grad auf und dient zum Empfangen elektromagnetischer Wellen aus diesem Öffnungswinkel. Auf diese Weise ist ein Empfangen elektromagnetischer Wellen aus jedem Einfallswinkel auf die Windenergieanlage möglich.

Gemäß einer weiteren Ausführungsform umfasst der Empfänger des Passivradars auch einen vertikalen Öffnungswinkel zum Empfangen elektromagnetischer Wellen. Der vertikale Öffnungswinkel ist bevorzugt voreinstellbar. Ein vertikaler Öffnungswinkel gemäß einer bevorzugten Ausführungsform entspricht einem Winkel zwischen 60 und 80 Grad.

Gemäß einer weiteren Ausführungsform umfasst das Windparkflugbefeuerungssystem mindestens einen Empfänger zum Empfangen von Signalen mobiler Sender, insbesondere von Flugfunktranspondern. Demnach ist der mobile Sender beispielsweise ein Flugfunktransponder, der in Flugobjekten angeordnet sein kann und eine Kennung, z. B. eine 24-bit-Kennung, aussendet, mit der das Flugobjekt eindeutig oder zumindest der Typ des Flugobjekts erkannt werden kann. Der Empfänger des Windparkflugbefeuerungssystems empfängt dieses Signal und kann somit ein mit der Sende- und Empfangsstation detektiertes Objekt eindeutig klassifizieren und deren Flugbahn verfolgen.

Flugobjekte, die ihre Flugbahn beispielsweise kreuzen, können somit eindeutig voneinander unterschieden werden.

Ferner ist eine redundante Erkennung von Flugobjekten im Bereich des Windparks möglich, da einerseits die mittels der Signale der mobilen Transponder und andererseits die mittels der Auswertevorrichtung in den Bereich des Windparks eintretende Flugobjekte erkannt werden können.

Gemäß einem weiteren Aspekt dieses Ausführungsbeispiels werden die Flugbahnen von Flugobjekten, die mittels der Signale von mobilen Sendern sowie auch mittels der Auswertevorrichtung detektiert werden, über vorbestimmte Zeiträume, z. B. ein Jahr oder sechs Monate, gespeichert.

Die gespeicherten Daten können bei einem Wartungsintervall des Windparkflugbefeuerungssystems abgerufen werden und dienen dann zur Verifikation der korrekten Funktion des Windparkflugbefeuerungssystems. Hierzu werden beispielsweise die für das gleiche Flugobjekt auf die verschiedenen Weisen zu gleichen Zeitpunkten detektierten Positionen verglichen. Bei Übereinstimmung ist von einem korrekt funktionierenden Windparkflugbefeuerungssystems auszugehen, während bei einer nicht vorhandenen Übereinstimmung auf eine Fehlfunktion zu schließen ist.

Gemäß einer weiteren Ausführungsform ist in der Schalteinrichtung für den Windpark ein Sektor definierbar. Dieser Sektor entspricht insbesondere dem zuvor genannten Bereich des Windparks. Die Schalteinrichtung ist dann eingerichtet, um mindestens eine, mehrere oder alle Flugbefeuerungseinrichtungen einzuschalten oder eingeschaltet zu lassen, wenn mittels der Auswerteeinrichtung ein oder mehrere Flugobjektpositionen detektiert werden, die innerhalb des vordefinierten Sektors um den Windpark liegen.

Gemäß einer weiteren Ausführungsform ist die Schalteinrichtung ferner eingerichtet, mindestens eine der Flugbefeuerungseinrichtungen auszuschalten oder ausgeschaltet zu lassen, wenn mittels der Auswerteeinrichtung keine Flugobjektpositionen, also keine Flugobjekte mit Positionen detektiert werden, die innerhalb des vordefinierten Sektors um den Windpark liegen.

Demnach wird durch das Definieren eines Sektors ein Bereich um den Windpark festgelegt, der zum Beispiel gemäß gesetzlicher Vorgaben oder Richtlinien als Bereich definiert ist, innerhalb dem der Aufenthalt eines Flugobjekts zum Einschalten von Flugbefeuerungen von Windenergieanlagen führen muss. Der Sektor entspricht einem dreidimensionalen Raum oder Bereich, der z. B. durch x-, y- und z-Koordinaten in der Schalteinrichtung definiert ist.

Ein derartiger Sektor umfasst demnach z. B. einen Bereich oder Raum, dessen Unterseite durch den Erdboden, auf dem die Windenergieanlagen des Windparks installiert sind, definiert ist. Die Oberseite des Sektors wird durch eine Fläche gebildet, die in ihrer Gesamtheit mindestens mehrere hundert Meter über der Unterseite, z. B. 600 Meter über der Unterseite, liegt. Die Seitenflächen des Sektors sind ferner so definiert, dass jede der Seitenflächen mindestens einige Kilometer, insbesondere vier Kilometer, von einer durch die außenliegenden Windenergieanlagen definierten Kontur des Windparks in horizontaler Richtung entfernt liegen.

Demnach wird durch die Seitenflächen zusammen mit der Oberseite und Unterseite des Sektors ein dreidimensionaler Raum oder Bereich definiert, deren horizontale Ausbreitung um den gesamten Windpark mit einem Abstand von mindestens mehreren Kilometern, insbesondere vier Kilometer, zu den außenliegenden Windenergieanlagen des Windparks verläuft.

Treten Flugzeuge also in diesen Bereich, also den definierten Sektor um den Windpark, ein, so werden die Flugbefeuerungseinrichtungen eingeschaltet, um das Flugobjekt zu warnen. Sind keine Flugobjekte mehr im Bereich, also dem definierten Sektor, so werden die Flugbefeuerungseinrichtungen ausgeschaltet. Ein rechtzeitiges Warnen von Flugobjekten ist somit gewährleistet, während zusätzlich Energiekosten gespart werden.

Gemäß einer weiteren Ausführungsform weist jede Windenergieanlage des Windparks jeweils genau eine Flugbefeuerungseinrichtung auf, die insbesondere zwei Leuchten, die vorzugsweise jeweils um 360 Grad in der Horizontalen abstrahlen, umfasst. Demnach kann ein Flugobjekt vorteilhafterweise jede einzelne Windenergieanlage bei schlechter Sicht erkennen und die Flugbahn entsprechend anpassen.

Gemäß einer weiteren Ausführungsform sind in der Schalteinrichtung mehrere Teilsektoren jeweils für eine oder mehrere Windenergieanlagen des Windparks definierbar. Insbesondere ist in der Schalteinrichtung für jede Windenergieanlage ein eigener Teilsektor definierbar. Jeder Teilsektor entspricht einem dreidimensionalen Raum oder Bereich, der z. B. durch x-, y- und z-Koordinaten in der Schalteinrichtung definiert ist.

Hierfür umfasst dann jeder Teilsektor z. B. einen Bereich oder Raum, dessen Unterseite durch den Erdboden definiert ist, auf dem die dem jeweiligen Teilsektor zugeordnete Windenergieanlage oder die dem jeweiligen Teilsektor zugeordneten Windenergieanlagen installiert sind. Die Oberseite jedes Teilsektors wird jeweils durch eine Fläche gebildet, die in ihrer Gesamtheit mindestens mehrere hundert Meter über der Unterseite des jeweiligen Teilsektors, z. B. 600 Meter über der Unterseite, liegt. Die Seitenflächen jedes Teilsektors sind so definiert, dass diese mindestens einige Kilometer, insbesondere vier Kilometer, von der oder jeder der dem jeweiligen Teilsektor zugeordneten Windenergieanlage oder Windenergieanlagen in horizontaler Richtung entfernt liegen. Demnach entspricht jeder Teilsektor einem dreidimensionalen Raum, wobei sich die Teilsektoren natürlich auch überschneiden können.

Ferner ist die Schalteinrichtung eingerichtet, die Flugbefeuerungseinrichtung der Windenergieanlage oder Windenergieanlagen einzuschalten oder eingeschaltet zu lassen, wenn mittels der Auswerteeinrichtung ein oder mehrere Flugobjektpositionen detektiert werden, die innerhalb des für die jeweilige Windenergieanlage oder Windenergieanlagen definierten Teilsektors liegen.

Gemäß einer weiteren Ausführungsform ist die Schalteinrichtung außerdem eingerichtet, die Flugbefeuerungseinrichtung der Windenergieanlage oder Windenergieanlagen auszuschalten oder ausgeschaltet zu lassen, wenn mittels der Auswerteeinrichtung keine Flugobjektpositionen detektiert werden, die innerhalb des für die jeweilige Windenergieanlage oder Windenergieanlagen definierten Teilsektors liegen.

Somit ist ein selektives Ein- und Abschalten der Flugbefeuerungseinrichtungen der Windenergieanlagen möglich. Dies ist besonders vorteilhaft bei sehr großen Windparks, die zum Beispiel eine Ausbreitungsrichtung von mehreren Kilometern aufweisen. Bei derartigen Windparks gilt es daher nur die Flugbefeuerungseinrichtungen der Windenergieanlagen einzuschalten, wenn ein Flugobjekt in die Teilsektoren der jeweiligen Windenergieanlagen eintritt.

Es ist also möglich, in einem Windpark, der zum Beispiel von West nach Ost eine Ausbreitung von 10 Kilometern aufweist und dem sich im Bereich der westlichen Grenze des Windparks ein Flugobjekt nähert, zunächst nur die westlich liegenden Windenergieanlagen, die zum Beispiel einen Abstand von etwa 4 bis 5 Kilometern zum Flugobjekt aufweisen, einzuschalten. Die weiter östlich liegenden Flugbefeuerungseinrichtungen können zunächst abgeschaltet bleiben, so dass Energie für den Betrieb dieser Flugbefeuerungseinrichtungen eingespart wird.

Gemäß einer weiteren Ausführungsform ist in der Schalteinrichtung eine Topologie von Objekten und Geodaten hinterlegbar. Vorzugsweise ist die Topologie von Objekten und Geodaten des definierten Sektors und/oder der definierten Teilsektoren des Windparks hinterlegbar.

Ferner ist die Auswerteeinrichtung zum Detektieren von Objektpositionen und Geodaten durch Auswertung der ausgesendeten und/oder empfangenen elektromagnetischen Wellen oder Schallwellen und zum Übergeben der detektierten Objektpositionen und Geodaten an die Schalteinrichtung eingerichtet. Außerdem ist die Schalteinrichtung eingerichtet, durch Betrachtung der zeitlichen Veränderung der übergebenen Daten oder insbesondere durch Kennzeichnung der sich nicht zeitlich verändernden Daten eine Topologie von Objekten und Geodaten, insbesondere eines definierten Sektors und/oder definierter Teilsektoren des Windparks, zu erzeugen. Diese Objekte und Geodaten sind demnach keine Flugobjekte, deren Position sich natürlich über die Zeit betrachtet verändern würde

Demnach werden Topologiedaten in der Schalteinrichtung hinterlegt, mit denen dann vor dem Ein- oder Abschalten der Flugbefeuerung verifiziert werden kann, ob es sich bei dem von der Auswerteeinrichtung detektierten Flugobjekt tatsächlich um ein Flugobjekt handelt. Z. B. sind aus den Topologiedaten Straßen- oder Autobahnverläufe entnehmbar und somit sich bewegende Objekte im Bereich der Straßen- oder Autobahnverläufe eindeutig als Objekte, die tatsächlich keine Flugobjekte sind, verifizierbar.

Ferner dienen die Topologiedaten zur Verifikation des Windparkflugbefeuerungssystems selbst. Gemäß einer Ausführungsform ist es möglich zu prüfen oder zu verifizieren, ob das Windparkflugbefeuerungssystem einwandfrei funktioniert, indem die mit der Auswerteeinrichtung detektierten Topologiedaten mit hinterlegten Topologiedaten übereinstimmen. Hierdurch können auch z. B. Nebel, Hagel oder Blitze detektiert werden, indem z. B. festgestellt wird, dass die detektierten Topologiedaten nicht mit hinterlegten Topologiedaten übereinstimmen.

Ferner betrifft die Erfindung einen Windpark mit einem Windparkflugbefeuerungssystem nach einem der vorhergehenden Ausführungsformen.

Außerdem betrifft die Erfindung ein Verfahren zur Befeuerung, also zur Flugbefeuerung, eines Windparks. Gemäß dem Verfahren werden elektromagnetische Wellen und/oder Schallwellen mit einer Sendestation ausgesendet. Ferner werden elektromagnetische Wellen und/oder Schallwellen mit mindestens einer Empfangsstation und/oder der Sendestation empfangen und Positionen von Flugobjekten, also Flugobjektpositionen, durch Auswertung der ausgesendeten und/oder empfangenen elektromagnetischen Wellen und/oder Schallwellen mit einer Auswerteeinrichtung detektiert.

Außerdem wird mindestens eine der Flugbefeuerungseinrichtungen in Abhängigkeit der Positionen der mit der Auswerteeinrichtung detektierten Flugobjektpositionen ein- und/oder ausgeschaltet.

Nachfolgend werden Ausführungsbeispiele der vorliegenden Erfindung exemplarisch unter Bezugnahme auf die begleitenden Figuren näher erläutert. Es zeigen
- Fig. 1: eine Windenergieanlage,
- Fig. 2: einen Windpark mit einem Ausführungsbeispiel eines Windparkflugbefeuerungssystems,
- Fig. 3: eine Gondel einer Windenergieanlage mit einer Empfangsstation und
- Fig. 4: eine Gondel einer Windenergieanlage mit einer Sendestation.

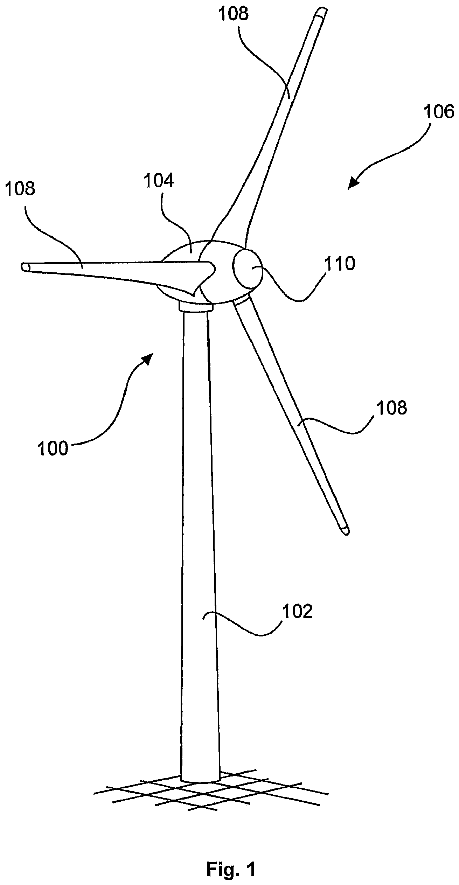

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

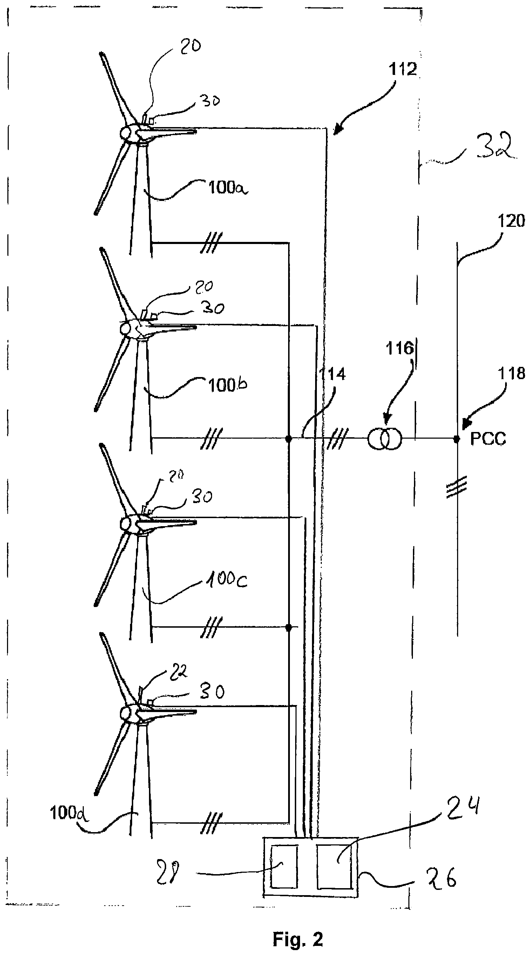

Die Windenergieanlage 100 aus Fig. 1, kann auch im Zusammenschluss mit mehreren weiteren Windenergieanlagen 100 in einem Windpark, wie er im Folgenden in Bezug auf Fig. 2 beschrieben wird, betrieben werden.

In Fig. 2 ist ein Windpark 112 mit exemplarisch vier Windenergieanlagen 100a bis 100c dargestellt. Die vier Windenergieanlagen 100a bis 100d können gleich oder verschieden sein. Die Windenergieanlagen 100a bis 100d stehen somit repräsentativ für im Grunde eine beliebige Anzahl von Windenergieanlagen 100 eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen.

Fig. 2 ist nur eine vereinfachte Darstellung eines Windparks 112, die beispielsweise keine Leistungssteuerung zeigt, obwohl natürlich eine Leistungssteuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

Ferner ist ein Ausführungsbeispiel des Windparkflugbefeuerungssystems dargestellt. Im Einzelnen weisen die Windenergieanlagen 100a bis 100c jeweils eine Empfangsstation 20 auf. Die Windenergieanlage 100d umfasst eine Sendestation 22.

Mit der Sendestation 22 werden elektromagnetische Wellen ausgesendet, die dann zum Beispiel von Flugobjekten reflektiert werden. Die reflektierten elektromagnetischen Wellen werden daraufhin von einer oder mehreren der Empfangsstationen 20 empfangen und einer Auswerteeinrichtung 24 zugeführt.

Mindestens zwei der Empfangsstationen 20 weisen einen Höhenunterschied zueinander von etwa 50 Metern auf. Dieser Höhenunterschied ist in der Fig. 2 zur einfacheren Übersicht nicht dargestellt. Der Höhenunterschied wird beispielsweise dadurch erreicht, dass eine der Empfangsstationen 20 an einer auf einer Anhöhe stehenden Windenergieanlage 100 angeordnet ist, während eine weitere Empfangsstation 20 an einer anderen Windenergieanlage 100 angeordnet ist, die tiefer, z. B. in einer Senke, steht.

Die Auswerteeinrichtung 24 ist Teil einer Steuerung 26 des Windparkflugbefeuerungssystems. Mit dieser Steuerung 26 wird auch zum Beispiel die Sendestation 22 zum Aussenden der elektromagnetischen Wellen angesteuert.

In der Auswerteeinrichtung 24 werden Flugobjektpositionen, also die Positionen von Flugobjekten durch Auswertung der ausgesendeten und empfangenen elektromagnetischen Wellen detektiert. Hierzu ist gemäß einem Ausführungsbeispiel die Messung des Laufzeitunterschiedes vom Zeitpunkt des Aussendens bestimmter elektromagnetischer Wellen mit der Sendestation 22 bis zum Empfangen der reflektierten elektromagnetischen Wellen mit der Empfangsstation 20 erfasst.

Durch die bekannte Ausbreitungsgeschwindigkeit der elektromagnetischen Wellen sowie die erfasste Laufzeit kann ein Abstand eines Flugobjekts, an dem die elektromagnetischen Wellen reflektiert wurden, mit der Auswerteeinrichtung 24 bestimmt werden. Somit sind dann aus diesen Abständen die Flugobjektpositionen bestimmbar.

Ferner ist eine Schalteinrichtung 28 vorgesehen, die hier exemplarisch ebenfalls Bestandteil der Steuerung 26 ist. Mit der Schalteinrichtung 28 sind Flugbefeuerungseinrichtungen 30, die auf der Gondel 104 jeder Windenergieanlage 100a bis 100d angeordnet sind, an- und abschaltbar. Die Flugbefeuerungseinrichtung 30 wird in Abhängigkeit der Flugobjektpositionen, die mit der Auswerteeinrichtung 24 bestimmt wurden, ein- oder abgeschaltet.

Ob eine Flugbefeuerungseinrichtung 30 ein- oder abgeschaltet wird, ist abhängig von der genauen Position des Flugobjekts. Hierzu ist ein Sektor 32 in der Schalteinrichtung 28 definiert. Dieser Sektor 32 ist in Fig. 2 exemplarisch zweidimensional dargestellt, wobei dieser üblicherweise dreidimensionale Ausmaße, also z. B. eine Breite, eine Höhe und eine Tiefe hat, wobei sich die Windenergieanlagen 100a bis 100d im Wesentlichen im Zentrum des Sektors 32 befinden.

Auch ist der Sektor 32 in Fig. 2 sehr nahe an den Windenergieanlagen 100a bis 100d dargestellt, wobei die äußere Begrenzung des Sektors 32 üblicherweise einen Abstand von mehreren Kilometern zu den Windenergieanlagen in zumindest horizontaler Richtung aufweisen kann.

Wird nun mit der Auswerteeinrichtung 24 eine Position eines Flugobjekts, also eine Flugobjektposition innerhalb dieses Sektors 32 detektiert, so werden gemäß diesem Ausführungsbeispiel die Flugbefeuerungseinrichtungen 30 eingeschaltet oder bleiben eingeschaltet, wenn bereits zuvor ein anderes Flugobjekt im Sektor 32 detektiert wurde.

Im Falle, dass kein Flugobjekt (mehr) im Sektor 32, also keine Flugobjektposition innerhalb des Sektors 32, detektiert wird, werden die Flugbefeuerungseinrichtungen 30 abgeschaltet bzw. bleiben abgeschaltet.

Hier ist ein Sektor 32 dargestellt, der den gesamten Windpark 112 "einrahmt". Gemäß einem anderen hier nicht dargestellten Ausführungsbeispiel ist es jedoch auch möglich, dass für jede Windenergieanlage 100a bis 100c jeweils ein eigener Teilsektor definiert wird, der dann von der Auswerteeinrichtung 24 separat überwacht wird.

Demnach wird die Flugbefeuerung 30 einer Windenergieanlage 100a bis 100c in dem Falle eingeschaltet, wenn ein Flugobjekt in den jeweiligen Teilsektor einer Windenergieanlage 100a bis 100c eintritt bzw. in diesen Teilsektor der Windenergieanlage 100a bis 100c detektiert wird. Somit ist ein selektives Einschalten einzelner Flugbefeuerungseinrichtungen 30 in Abhängigkeit der Flugobjektpositionen möglich. Insbesondere bei großen Windparks, die sich über eine Fläche von mehreren Kilometern erstrecken, können somit Flugbefeuerungseinrichtungen 30 nur in dem Teil des Windparks 112, der tatsächlich eine Gefährdung für ein Flugobjekt darstellen könnte, aktiviert werden.

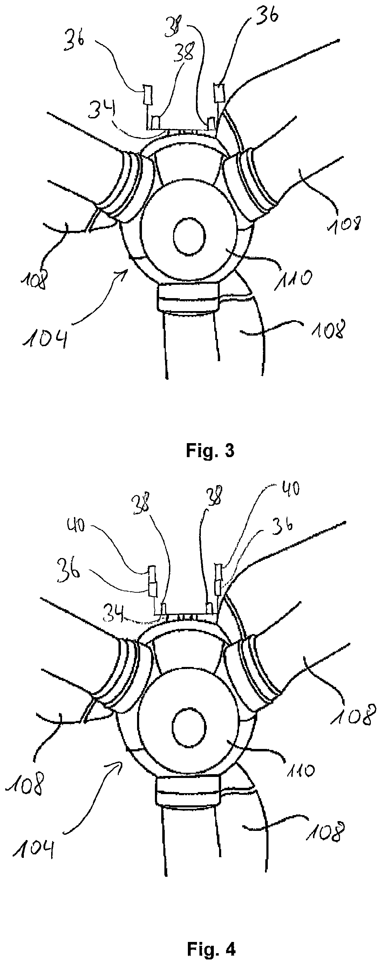

Fig. 3 zeigt die Frontansicht einer Gondel 104 einer Windenergieanlage 100 in vergrößerter Darstellung. Auf der Gondel 104 ist ein Antennenträger 34 angeordnet und fest mit der Gondel 104 verbunden. Der Antennenträger 34 weist zwei Empfänger 36 jeweils eines Passivradars auf, die zusammen einer Empfangsstation 20 entsprechen. Die Empfänger dienen zum Empfangen elektromagnetischer Wellen und haben einen horizontalen Öffnungswinkel von 360 Grad.

Ferner sind zwei Leuchten 38 vorgesehen, die zusammen eine Flugbefeuerungseinrichtung 30 der Windenergieanlage 100 bilden. Durch die beabstandete Anordnung der Leuchten 38 einerseits sowie der Empfänger 36 andererseits erfolgt eine Dopplung der Systeme, so dass trotz der teilweisen Verschattung durch die Rotorblätter 108 trotzdem eine fehlerfreie Funktion des Windparkflugbefeuerungssystems gewährleistet wird.

Demnach stellt die Figur 3 eine vergrößerte Darstellung der Gondel 104 einer der Windenergieanlagen 100a bis 100c aus Fig. 2 dar.

Fig. 4 entspricht der Fig. 3 im Wesentlichen, wobei nun neben den Empfängern 36 der Passivradare noch zwei Sender 40 zum Aussenden elektromagnetischer Wellen vorgesehen sind. Demnach entsprechen die Sender 40 sowie die Empfänger 36 zusammen einer Sendestation 22. Demnach ist in Figur 4 die vergrößerte Darstellung der Gondel 104 der Windenergieanlage 100d aus Fig. 2 dargestellt.

Ein Windpark 112, ausgestattet mit einem Windparkflugbefeuerungssystem, umfassend mehrere Empfangsstationen 20 sowie eine einzelne Sendestation 22 ermöglicht somit eine von Transpondersignalen und anderen Sendesignalen unabhängige Steuerung der Flugbefeuerungseinrichtungen 30 des Windparks 112, wobei das Windparkflugbefeuerungssystem gleichzeitig auf eine Vielzahl von aktiven Radaren verzichtet und somit wesentlich günstiger als bereits bekannte Lösungen ist.

## Patentansprüche

1. Windparkflugbefeuerungssystem für einen Windpark (112), umfassend:
- mehrere Flugbefeuerungseinrichtungen (30),
- mindestens eine Sendestation (22) zum Aussenden von elektromagnetischen Wellen und/oder Schallwellen,
- mindestens zwei Empfangsstationen (20) zum Empfangen von elektromagnetischen Wellen und/oder Schallwellen, wobei die Anzahl der Empfangsstationen (20) mindestens ein Mehrfaches der Anzahl der Sendestationen (20) beträgt,
- eine Auswerteeinrichtung (24) zum Detektieren von Flugobjektpositionen durch Auswertung der ausgesendeten und/oder empfangenen elektromagnetischen Wellen und/oder Schallwellen, insbesondere durch Laufzeitbestimmung, und
- mindestens eine Schalteinrichtung (28) zum Ein- oder Ausschalten mindestens einer der Flugbefeuerungseinrichtungen (30) in Abhängigkeit der mit der Auswerteeinrichtung detektierten Flugobjektpositionen,
wobei für jede Windenergieanlage (100) des Windparks (112) jeweils genau eine Flugbefeuerungseinrichtung (30) vorgesehen ist,
**dadurch gekennzeichnet, dass**
in der Schalteinrichtung (28) für mehrere oder jede Windenergieanlage (100) des Windparks (112) jeweils ein Teilsektor definierbar ist und die Schalteinrichtung (28) eingerichtet ist, die Flugbefeuerungseinrichtung (30) der dem jeweiligen Teilsektor zugeordneten Windenergieanlage (100) oder Windenergieanlagen (100) einzuschalten oder eingeschaltet zu lassen, wenn mittels der Auswerteeinrichtung (24) ein oder mehrere Flugobjektpositionen detektiert werden, die innerhalb des für die Windenergieanlagen (100) oder Windenergieanlagen (100) definierten Teilsektors liegen.

2. Windparkflugbefeuerungssystem nach Anspruch 1, wobei die Sendestation (22) und/oder die Empfangsstationen (20) eingerichtet sind, an oder auf der Gondel (104) einer Windenergieanlage (100) angeordnet zu werden.

3. Windparkflugbefeuerungssystem nach Anspruch 1 oder 2, wobei die Sendestation (22) zwei zueinander beabstandet angeordnete Aktivradare, insbesondere Impulsradare, umfasst.

4. Windparkflugbefeuerungssystem nach Anspruch 3, wobei jedes Aktivradar jeweils einen Sender (40) mit einem horizontalen Öffnungswinkel von 360 Grad zum Aussenden elektromagnetischer Wellen und vorzugsweise jeweils einen Empfänger (36) mit einem horizontalen Öffnungswinkel von 360 Grad zum Empfangen elektromagnetischer Wellen umfasst.

5. Windparkflugbefeuerungssystem nach einem der vorhergehenden Ansprüche, wobei das Windparkflugbefeuerungssystem mindestens drei Empfangsstationen (20) umfasst.

6. Windparkflugbefeuerungssystem nach Anspruch 5, wobei mindestens zwei der Empfangsstationen (20) eingerichtet sind, zueinander mit einem Höhenunterschied, insbesondere mit einem Höhenunterschied von mehr als 5, 10 oder 20 Metern, vorzugsweise mit einem Höhenunterschied von 40 bis 60 Metern, zueinander angeordnet zu werden.

7. Windparkflugbefeuerungssystem nach einem der vorhergehenden Ansprüche, wobei für jede Windenergieanlage (100) des Windparks (112) jeweils genau eine Empfangsstation (20) und/oder für einen oder mehrere Windparks (112) genau eine Sendestation (22) vorgesehen ist.

8. Windparkflugbefeuerungssystem nach einem der vorhergehenden Ansprüche, wobei die Empfangsstationen (20) jeweils zwei zueinander beabstandet angeordnete Passivradare umfassen.

9. Windparkflugbefeuerungssystem nach Anspruch 8, wobei jedes Passivradar jeweils einen Empfänger (36) mit einem horizontalen Öffnungswinkel von 360 Grad zum Empfangen elektromagnetischer Wellen umfasst.

10. Windparkflugbefeuerungssystem nach einem der vorhergehenden Ansprüche, wobei das Windparkflugbefeuerungssystem mindestens einen Empfänger zum Empfangen von Signalen eines mobilen Senders, insbesondere eines Flugfunktransponders, aufweist.

11. Windparkflugbefeuerungssystem nach einem der vorhergehenden Ansprüche, wobei in der Schalteinrichtung (28) für den Windpark (112) ein Sektor (32) definierbar ist und die Schalteinrichtung (28) eingerichtet ist, mindestens eine der Flugbefeuerungseinrichtungen (30) einzuschalten oder eingeschaltet zu lassen, wenn mittels der Auswerteeinrichtung (24) ein oder mehrere Flugobjektpositionen detektiert werden, die innerhalb des vordefinierten Sektors (32) um den Windpark (112) liegen.

12. Windparkflugbefeuerungssystem nach einem der vorhergehenden Ansprüche, wobei in der Schalteinrichtung (28) für mehrere oder jede Windenergieanlage (100) des Windparks (112) jeweils ein Teilsektor definierbar ist und die Schalteinrichtung (28) eingerichtet ist, die Flugbefeuerungseinrichtung (30) der dem jeweiligen Teilsektor zugeordneten Windenergieanlage (100) oder Windenergieanlagen (100) auszuschalten oder ausgeschaltet zu lassen, wenn mittels der Auswerteeinrichtung (24) keine Flugobjektpositionen detektiert werden, die innerhalb des für die Windenergieanlage (100) oder Windenergieanlagen (100) definierten Teilsektors liegen.

13. Windparkflugbefeuerungssystem nach einem der vorhergehenden Ansprüche, wobei in der Schalteinrichtung (28) eine Topologie von Objekten und Geodäten, insbesondere eines definierten Sektors und/oder definierter Teilsektoren des Windparks hinterlegbar ist und/oder
die Auswerteeinrichtung (24) zum Detektieren von Objektpositionen und Geodaten durch Auswertung der ausgesendeten und/oder empfangenen elektromagnetischen Wellen oder Schallwellen und zum Übergeben der detektierten Objektpositionen und Geodaten an die Schalteinrichtung (28) eingerichtet ist und die Schalteinrichtung (28) eingerichtet ist, durch Betrachtung oder Kennzeichnung der sich zeitlich nicht verändernden Objektpositionen und Geodaten der übergebenen Daten eine Topologie von Objekten und Geodäten, insbesondere eines definierten Sektors und/oder definierter Teilsektoren des Windparks, zu erzeugen.

14. Windpark mit einem Windparkflugbefeuerungssystem nach einem der Ansprüche 1 bis 13.

15. Verfahren zur Befeuerung eines Windparks mit einem Windparkflugbefeuerungssystem nach einem der Ansprüche 1 bis 13, mit den Schritten:
- Aussenden elektromagnetischer Wellen und/oder Schallwellen mit mindestens einer Sendestation (22),
- Empfangen elektromagnetischer Wellen und/oder Schallwellen mit mindestens einer Empfangsstation (20) und/oder der Sendestation (22) und,
- Detektieren der Flugobjektpositionen durch Auswertung der ausgesendeten und/oder empfangenen elektromagnetischen Wellen und/oder Schallwellen mit einer Auswerteeinrichtung (24) und
- Ein- oder Ausschalten mindestens einer der Flugbefeuerungseinrichtungen (30) in Abhängigkeit der Positionen der mit der Auswerteeinrichtung (24) detektierten Flugobjektpositionen mit einer Schalteinrichtung (28).

## Claims

1. A wind farm aircraft beacon system for a farm (112), comprising:
- a plurality of aircraft beacon devices (30),
- at least one transmission station (22) for emitting electromagnetic waves and/or sound waves,
- at least two reception stations (20) for receiving electromagnetic waves and/or sound waves, the number of reception stations (20) being at least a multiple of the number of transmission stations (20),
- an evaluation device (24) for detecting flying object positions by evaluating the emitted and/or received electromagnetic waves and/or sound waves, in particular by time-of-flight determination, and
- at least one switching device (28) for switching at least one of the aircraft beacon devices (30) on or off as a function of the flying object positions detected by the evaluation device,
wherein precisely one aircraft beacon device (30) is respectively provided for each wind power installation (100) of the wind farm (112),
**characterized in that**
a subsector can respectively be defined in the switching device (28) for a plurality or each of the wind power installations (100) of the wind farm (112), and the switching device (28) is configured to switch on, or leave switched on, the aircraft beacon device (30) of the wind power installation (100) or wind power installations (100) assigned to the respective subsector when one or more flying object positions that lie inside the subsector defined for the wind power installation (100) or wind power installations (100) are detected by means of the evaluation device (24).

2. The wind farm aircraft beacon system as claimed in claim 1,
wherein the transmission station (22) and/or the reception stations (20) are configured to be arranged at or on the gondola (104) of a wind power installation (100).

3. The wind farm aircraft beacon system as claimed in claim 1 or 2,
wherein the transmission station (22) comprises two active radars, in particular pulse radars, arranged at a distance from one another.

4. The wind farm aircraft beacon system as claimed in claim 3,
wherein each active radar respectively comprises a transmitter (40) with a horizontal aperture angle of 360 degrees for emitting electromagnetic waves, and preferably respectively a receiver (36) with a horizontal aperture angle of 360 degrees for receiving electromagnetic waves.

5. The wind farm aircraft beacon system as claimed in one of the preceding claims, wherein the wind farm aircraft beacon system comprises at least three reception stations (20).

6. The wind farm aircraft beacon system as claimed in claim 5,
wherein at least two of the reception stations (20) are configured to be arranged with respect to one another with a height difference, in particular with a height difference of more than 5, 10 or 20 meters, preferably with a height difference of from 40 to 60 meters.

7. The wind farm aircraft beacon system as claimed in one of the preceding claims,
wherein in each case precisely one reception station (20) is provided for each wind power installation (100) of the wind farm (112), and/or precisely one transmission station (22) is provided for one or more wind farms (112).

8. The wind farm aircraft beacon system as claimed in one of the preceding claims,
wherein the reception stations (20) respectively comprise two passive radars arranged at a distance from one another.

9. The wind farm aircraft beacon system as claimed in claim 8,
wherein each passive radar respectively comprises a receiver (36) with a horizontal aperture angle of 360 degrees for receiving electromagnetic waves.

10. The wind farm aircraft beacon system as claimed in one of the preceding claims,
wherein the wind farm aircraft beacon system has at least one receiver for receiving signals of a mobile transmitter, in particular of a radio flight transponder.

11. The wind farm aircraft beacon system as claimed in one of the preceding claims,
wherein a sector (32) can be defined in the switching device (28) for the wind farm (112), and the switching device (28) is configured to switch on, or leave switched on, at least one of the aircraft beacon devices (30) when one or more flying object positions that lie inside the predefined sector (32) around the wind farm (112) are detected by means of the evaluation device (24).

12. The wind farm aircraft beacon system as claimed in one of the preceding claims,
wherein a subsector can respectively be defined in the switching device (28) for a plurality or each of the wind power installations (100) of the wind farm (112), and the switching device (28) is configured to switch off, or leave switched off, the aircraft beacon device (30) of the wind power installation (100) or wind power installations (100) assigned to the respective subsector when no flying object positions that lie inside the subsector defined for the wind power installation (100) or wind power installations (100) are detected by means of the evaluation device (24).

13. The wind farm aircraft beacon system as claimed in one of the preceding claims,
wherein a topology of objects and geodata, in particular of a defined sector and/or of defined subsectors of the wind farm, can be stored in the switching device (28), and/or the evaluation device (24) is configured for detecting object positions and geodata by evaluating the emitted and/or received electromagnetic waves or sound waves and for transmitting the detected object positions and geodata to the switching device (28), and the switching device (28) is configured for generating a topology of objects and geodata, in particular of a defined sector and/or of defined subsectors of the wind farm, by observing or referencing the time-invariant object positions and geodata of the transmitted data.

14. A wind farm having a wind farm aircraft beacon system as claimed in one of claims 1 to 13.

15. A method for beaconing a wind farm with a wind farm aircraft beacon system as claimed in one claims 1 to 13, having the steps:
- emitting electromagnetic waves and/or sound waves with at least one transmission station (22),
- receiving electromagnetic waves and/or sound waves with at least one reception station (20) and/or the transmission station (22), and
- detecting the flying object positions by evaluating the emitted and/or received electromagnetic waves and/or sound waves with an evaluation device (24), and
- switching at least one of the aircraft beacon devices (30) on or off, as a function of the positions of the flying object positions detected by the evaluation device (24), with a switching device (28).

## Revendications

1. Système de feu de balisage de parc éolien pour un parc éolien (112), comprenant :
- plusieurs dispositifs de feu de balisage (30),
- au moins une station d'envoi (22) pour envoyer des ondes électromagnétiques et/ou des ondes acoustiques,
- au moins deux stations de réception (20) pour recevoir des ondes électromagnétiques et/ou des ondes acoustiques, dans lequel le nombre des stations de réception (20) est au moins un multiple du nombre des stations d'envoi (20),
- un dispositif d'analyse (24) pour détecter des positions d'objet volant en analysant les ondes électromagnétiques et/ou ondes acoustiques envoyées et/ou reçues, en particulier par la détermination du temps de propagation, et
- au moins un dispositif de commutation (28) pour activer ou désactiver au moins un des dispositifs de feu de balisage (30) en fonction des positions d'objet volant détectées avec le dispositif d'analyse,
dans lequel respectivement précisément un dispositif de feu de balisage (30) est prévu pour chaque éolienne (100) du parc éolien (112),
**caractérisé en ce que**
respectivement un secteur partiel peut être défini dans le dispositif de commutation (28) pour plusieurs ou chaque éolienne(s) (100) du parc éolien (112) et le dispositif de commutation (28) est mis au point pour activer ou faire activer le dispositif de feu de balisage (30) de l'éolienne (100) ou des éoliennes (100) associées au secteur partiel respectif quand sont détectées au moyen du dispositif d'analyse (24) une ou plusieurs positions d'objet volant, qui se situent à l'intérieur du secteur partiel défini pour l'éolienne (100) ou les éoliennes (100).

2. Système de feu de balisage de parc éolien selon la revendication 1, dans lequel la station d'envoi (22) et/ou les stations de réception (20) sont mises au point pour être disposées au niveau de ou sur la nacelle (104) d'une éolienne (100).

3. Système de feu de balisage de parc éolien selon la revendication 1 ou 2, dans lequel la station d'envoi (22) comprend deux radars actifs, en particulier des radars à impulsions, disposés à distance l'un par rapport à l'autre.

4. Système de feu de balisage de parc éolien selon la revendication 3, dans lequel chaque radar actif comprend respectivement un émetteur (40) avec un angle d'ouverture horizontal de 360 degrés pour envoyer des ondes électromagnétiques et de préférence respectivement un récepteur (36) avec un angle d'ouverture horizontal de 360 degrés pour recevoir des ondes électromagnétiques.

5. Système de feu de balisage de parc éolien selon l'une quelconque des revendications précédentes, dans lequel le système de feu de balisage comprend au moins trois stations de réception (20).

6. Système de feu de balisage de parc éolien selon la revendication 5, dans lequel au moins deux des stations de réception (20) sont mises au point pour être disposées l'une par rapport à l'autre avec une différence de hauteur, en particulier avec une différence de hauteur supérieure à 5, 10 ou 20 mètres, de préférence avec une différence de hauteur de 40 à 60 mètres, l'une par rapport à l'autre.

7. Système de feu de balisage de parc éolien selon l'une quelconque des revendications précédentes, dans lequel respectivement précisément une station de réception (20) est prévue pour chaque éolienne (100) du parc éolien (112) et/ou précisément une station d'envoi (22) est prévue pour un ou plusieurs parcs éoliens (112) .

8. Système de feu de balisage de parc éolien selon l'une quelconque des revendications précédentes, dans lequel les stations de réception (20) comprennent respectivement deux radars passifs disposés à distance l'un par rapport à l'autre.

9. Système de feu de balisage de parc éolien selon la revendication 8, dans lequel chaque radar passif comprend respectivement un récepteur (36) avec un angle d'ouverture horizontal de 360 degrés pour recevoir des ondes électromagnétiques.

10. Système de feu de balisage de parc éolien selon l'une quelconque des revendications précédentes, dans lequel le système de feu de balisage présente au moins un récepteur pour recevoir des signaux d'un émetteur mobile, en particulier d'un transpondeur radio de vol.

11. Système de feu de balisage de parc éolien selon l'une quelconque des revendications précédentes, dans lequel un secteur (32) peut être défini dans le dispositif de commutation (28) pour le parc éolien (112) et le dispositif de commutation (28) est mis au point pour activer ou faire activer au moins un des dispositifs de feu de balisage (30) quand sont détectées au moyen du dispositif d'analyse (24) une ou plusieurs positions d'objet volant, qui se trouvent à l'intérieur du secteur (32) défini autour du parc éolien (112).

12. Système de feu de balisage de parc éolien selon l'une quelconque des revendications précédentes, dans lequel respectivement un secteur partiel peut être défini dans le dispositif de commutation (28) pour plusieurs ou chaque éolienne (100) du parc éolien (112) et le dispositif de commutation (28) est mis au point pour désactiver ou faire désactiver le dispositif de feu de balisage (30) de l'éolienne (100) ou des éoliennes (100) associées au secteur partiel respectif, quand n'est détectée au moyen du dispositif d'analyse (24) aucune position d'objet volant, qui se trouve à l'intérieur du secteur partiel défini pour l'éolienne (100) ou les éoliennes (100).

13. Système de feu de balisage de parc éolien selon l'une quelconque des revendications précédentes, dans lequel une topologie d'objets et de données géographiques, en particulier d'un secteur défini et/ou de secteurs partiels définis du parc éolien peut être enregistrée dans le dispositif de commutation (28), et/ou
le dispositif d'analyse (24) est mis au point pour détecter des positions d'objet et des données géographiques en analysant les ondes électromagnétiques ou les ondes acoustiques envoyées et/ou reçues et est mis au point pour transférer les positions d'objet et les données géographiques détectées au dispositif de commutation (28) et le dispositif de commutation (28) est mis au point pour générer, en observant ou en marquant les positions d'objets ou données géographiques ne variant pas dans le temps des données transférées, une topologie d'objets et de données géographiques, en particulier d'un secteur défini et/ou de secteurs partiels définis du parc éolien.

14. Parc éolien avec un système de feu de balisage selon l'une quelconque des revendications 1 à 13.

15. Procédé de balisage d'un parc éolien avec un système de feu de balisage de parc éolien selon l'une quelconque des revendications 1 à 13, avec les étapes :
- d'envoi d'ondes électromagnétiques et/ou d'ondes acoustiques avec au moins une station d'envoi (22),
- de réception d'ondes électromagnétiques et/ou d'ondes acoustiques avec au moins une station de réception (20) et/ou la station d'envoi (22), et
- de détection des positions d'objet volant en analysant les ondes électromagnétiques et/ou les ondes acoustiques envoyées et/ou reçues avec un dispositif d'analyse (24), et
- d'activation ou de désactivation d'au moins un des dispositifs de feu de balisage (30) en fonction des positions des positions d'objet volant détectées avec le dispositif d'analyse (24) avec un dispositif de commutation (28).
